# EUROPEAN PATENT APPLICATION

(11) **EP 4 800 939 A1**
(43) Date of publication of application: **02.09.2026**
(21) Application number: 25752393.6
(22) Date of filing: 08.01.2025
(51) Int. Cl.: H04B 7/06, H04B 7/0413, H04B 17/318, H04B 17/336, H04W 24/08, H04W 72/231, H04W 72/232, H04W 72/0457

(54) **METHOD AND APPARATUS FOR PERFORMING USER EQUIPMENT-INITIATED BEAM MANAGEMENT**

(30) Priority: 07.02.2024 KR 20240019252; 12.04.2024 KR 20240049256
(71) Applicant: Hyundai Motor Company, Seoul 06797 (KR); Kia Corporation, Seoul 06797 (KR)
(72) Inventor: HONG, Ui Hyun, Hwaseong-si, Gyeonggi-do 18280 (KR); SUH, Young Kil, Hwaseong-si, Gyeonggi-do 18280 (KR); LEE, Jeong Su, Hwaseong-si, Gyeonggi-do 18280 (KR); HAHN, Gene Back, Hwaseong-si, Gyeonggi-do 18280 (KR)
(74) Representative: Isarpatent
(86) International application number: PCT/KR2025/000429
(87) International publication number: WO 2025/170214

(57) **Abstract**

This method of a user equipment for performing user equipment-initiated beam management may comprise the steps of: receiving first measurement setting information from a base station; performing measurement on the basis of the first measurement setting information; determining whether user equipment-initiated beam management is required on the basis of the measurement results; transmitting a user equipment-initiated beam management triggering signal to the base station if it is determined that the user equipment-initiated beam management is required; and performing user equipment-initiated beam management with the base station.

## Description

### [Technical Field]

The present disclosure relates to beam management for a mobile communication system, and more particularly, to a method and an apparatus for terminal-initiated beam management.

### [Background Art]

A communication network (e.g. 5G communication network or 6G communication network) is being developed to provide enhanced communication services compared to the existing communication networks (e.g. long term evolution (LTE), LTE-Advanced (LTE-A), etc.). The 5G communication network (e.g. New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, in the 3rd generation partnership project (3GPP) Release-19, standardization for user equipment-initiated and event-driven beam management to resolve problems associated with conventional network-driven beam management is in progress. The user equipment-initiated or event-driven beam management is a scheme in which a terminal, which can recognize the state of the current beam and variations in the beam faster than a base station, performs beam management in a proactive manner, unlike conventional network-driven beam management. However, a method for switching from network-driven beam management to user equipment-initiated beam management, as well as signaling methods required therefor, have not yet been clearly defined.

### [Disclosure]

### [Technical Problem]

The present disclosure is directed to providing a method and an apparatus for performing terminal-initiated beam management.

### [Technical Solution]

A method of a terminal, according to an exemplary embodiment of the present disclosure for achieving the above-described objective, may comprise: receiving first measurement configuration information from a base station; performing measurement based on the first measurement configuration information, and determining whether terminal-initiated beam management is required based on a result of the measurement; based on determining that the terminal-initiated beam management is required, transmitting a terminal-initiated beam management triggering signal to the base station; and performing terminal-initiated beam management with the base station.

The method may further comprise: receiving second measurement configuration information from the base station based on the terminal-initiated beam management triggering signal, wherein the terminal-initiated beam management may be performed based on the second measurement configuration information.

Measurement target reference signal(s) or resource(s) configured by the second measurement configuration information may be different from measurement target reference signal(s) or resource(s) configured by the first measurement configuration information.

The first measurement configuration information may indicate at least one of a channel state information-reference signal (CSI-RS), a synchronization signal block (SSB), a preconfigured signal, or a preconfigured time/frequency resource as a measurement target.

The second measurement configuration information may indicate at least one of a CSI-RS or SSB as a measurement target.

The terminal-initiated beam management triggering signal may be transmitted through a medium access control-control element (MAC-CE) and/or uplink control information (UCI).

The determining of whether the terminal-initiated beam management is required based on the result of the measurement may be performed based on a comparison between a first threshold and a first measurement value obtained by measuring measurement target reference signal(s) or resource(s) indicated by the first measurement configuration information at a first time.

The determining of whether the terminal-initiated beam management is required based on the result of the measurement may be performed based on a comparison between a second threshold and a second measurement value obtained by measuring measurement target reference signal(s) or resource(s) indicated by the first measurement configuration information during a first time window.

The determining of whether the terminal-initiated beam management is required based on the result of the measurement may be performed based on a comparison between a third threshold and a difference between a first measurement value obtained by measuring measurement target reference signal(s) or resource(s) indicated by the first measurement configuration information at a first time and a third measurement value obtained by measuring the measurement target reference signal(s) or resource(s) at a time immediately before the first time or at a time earlier by a predetermined duration than the first time.

The determining of whether the terminal-initiated beam management is required based on the result of the measurement may be performed based on a comparison between a fourth threshold and a difference between a fourth measurement value obtained by measuring measurement target reference signal(s) or resource(s) indicated by the first measurement configuration information during a second time window and a fifth measurement value obtained by measuring the measurement target reference signal(s) or resource(s) indicated by the first measurement configuration information during a third time window.

The determining of whether the terminal-initiated beam management is required based on the result of the measurement may be performed based on a comparison between a fifth threshold and a difference between a first measurement value obtained by measuring measurement target reference signal(s) or resource(s) indicated by the first measurement configuration information at a first time and a sixth measurement value obtained by measuring the measurement target reference signal(s) or resource(s) during a fourth time window preceding the first time.

A method of a base station, according to an exemplary embodiment of the present disclosure for achieving the above-described objective, may comprise: transmitting first measurement configuration information to a terminal; receiving a terminal-initiated beam management triggering signal from the terminal; and performing terminal-initiated beam management with the terminal based on the terminal-initiated beam management triggering signal, wherein the terminal may perform measurement based on the first measurement configuration information and transmit the terminal-initiated beam management triggering signal based on determining that the terminal-initiated beam management is required based on a result of the measurement.

The method may further comprise: transmitting second measurement configuration information to the terminal based on the terminal-initiated beam management triggering signal, wherein the terminal-initiated beam management may be performed based on the second measurement configuration information.

Measurement target reference signal(s) or resource(s) configured by the second measurement configuration information may be different from measurement target reference signal(s) or resource(s) configured by the first measurement configuration information.

The first measurement configuration information may indicate at least one of a channel state information-reference signal (CSI-RS), a synchronization signal block (SSB), a preconfigured signal, or a preconfigured time/frequency resource as a measurement target.

The second measurement configuration information may indicate at least one of a CSI-RS or SSB as a measurement target.

A terminal, according to an exemplary embodiment of the present disclosure for achieving the above-described objective, may comprise at least one processor, wherein the at least one processor may cause the terminal to: receive first measurement configuration information from a base station; perform measurement based on the first measurement configuration information, and determine whether terminal-initiated beam management is required based on a result of the measurement; based on determining that the terminal-initiated beam management is required, transmit a terminal-initiated beam management triggering signal to the base station; and perform terminal-initiated beam management with the base station.

The at least one processor may further cause the terminal to: receive second measurement configuration information from the base station based on the terminal-initiated beam management triggering signal, wherein the terminal-initiated beam management may be performed based on the second measurement configuration information.

Measurement target reference signal(s) or resource(s) configured by the second measurement configuration information may be different from measurement target reference signal(s) or resource(s) configured by the first measurement configuration information.

The first measurement configuration information may indicate at least one of a channel state information-reference signal (CSI-RS), a synchronization signal block (SSB), a preconfigured signal, or a preconfigured time/frequency resource as a measurement target.

### [Advantageous Effects]

When exemplary embodiments of the present disclosure are applied, a terminal can switch to user equipment-initiated beam management without delay while performing conventional network-driven beam management. In addition, uplink signaling overhead for switching to user equipment-initiated beam management can be minimized. Since switching to user equipment-initiated beam management can be performed without increasing signaling overhead and latency during conventional network-driven beam management, overall system performance can be improved, particularly in high-frequency bands in which fast beam switching is essential (e.g. FR2 bands).

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a block diagram illustrating a first exemplary embodiment of communication nodes performing communication.
FIG. 4A is a block diagram illustrating a first exemplary embodiment of a transmission path.
FIG. 4B is a block diagram illustrating a first exemplary embodiment of a reception path.
FIG. 5 is a conceptual diagram illustrating a first exemplary embodiment of a system frame in a communication system.
FIG. 6 is a conceptual diagram illustrating a first exemplary embodiment of a subframe in a communication system.
FIG. 7 is a conceptual diagram illustrating a first exemplary embodiment of a slot in a communication system.
FIG. 8 is a conceptual diagram illustrating a first exemplary embodiment of a time-frequency resource in a communication system.
FIG. 9 is a sequence diagram illustrating a terminal-initiated beam management method according to an exemplary embodiment of the present disclosure.
FIG. 10 and FIG. 11 are conceptual diagrams illustrating a method of determining whether to trigger terminal-initiated beam management according to exemplary embodiments of the present disclosure.
FIG. 12 and FIG. 13 are conceptual diagrams illustrating a method for determining whether to trigger terminal-initiated beam management according to other exemplary embodiments of the present disclosure.

### [Best mode of the Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g. transmission or reception of a signal) to be performed at a first communication node among communication nodes is described in exemplary embodiments, a corresponding second communication node may perform a method (e.g. reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission and reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g. master information block (MIB), system information block (SIB)) and/or an RRC message. The MAC signaling may refer to an operation of transmitting and receiving a MAC control element (CE). The PHY signaling may refer to an operation of transmitting and receiving control information (e.g. downlink control information (DCI), uplink control information (UCI), or sidelink control information (SCI)).

In the present disclosure, 'configuration of an operation (e.g. transmission operation)' may refer to signaling of configuration information (e.g. information elements, parameters) required for the operation and/or information indicating to perform the operation. 'configuration of information elements (e.g. parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g. 4G communication networks, 5G communication networks, and/or 6G communication networks). Here, 'communication network' may be used interchangeably with a term 'communication system'.

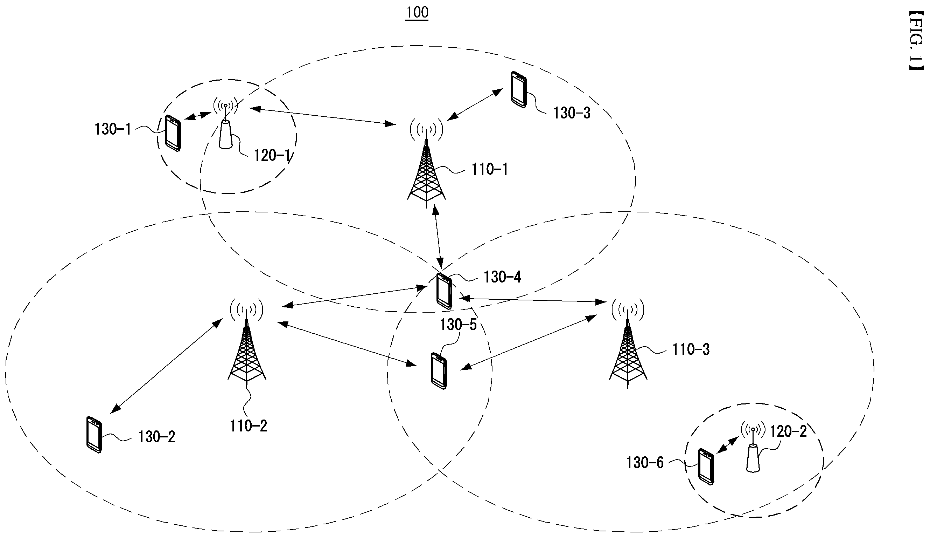

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g. a serving gateway (S-GW), a packet data network (PDN) gateway (P-GW), a mobility management entity (MME). When the communication system 100 is a 5G communication (e.g. NR system), the core network may include an access and mobility management function (AMF), a user plane function (UPF), a session management function (SMF), and the like.

The plurality of communication nodes 110 to 130 may support communication protocols (e.g. LTE communication protocol, LTE-A communication protocol, NR communication protocol, etc.) specified in 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

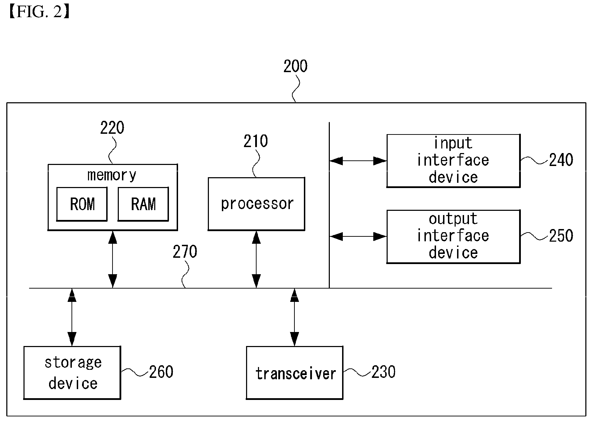

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a nonvolatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g. a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g. device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

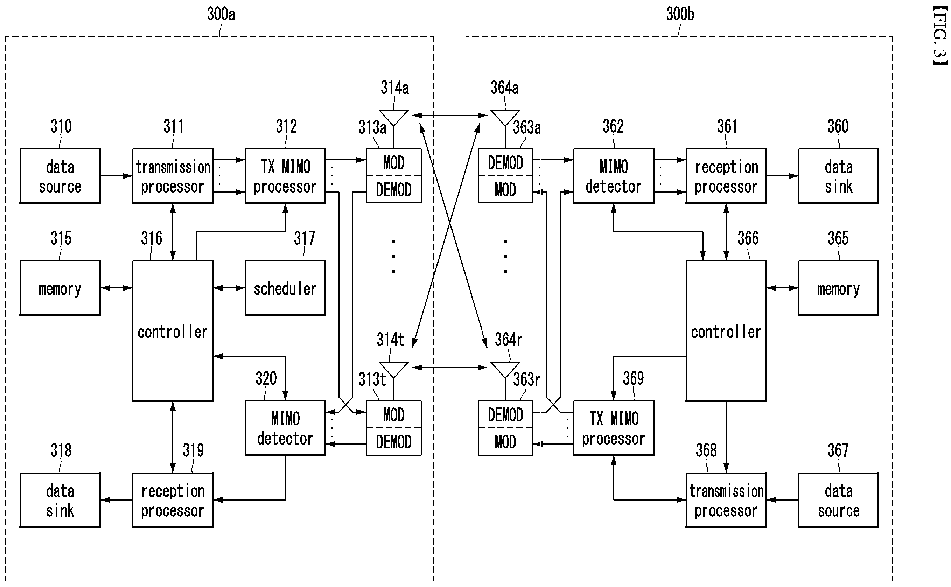

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g. data unit) from a data source 310. The transmission processor 311 may receive control information from a controller 316. The control information may include at least one of system information, RRC configuration information (e.g. information configured by RRC signaling), MAC control information (e.g. MAC CE), or PHY control information (e.g. DCI, SCI).

The transmission processor 311 may generate data symbol(s) by performing processing operations (e.g. encoding operation, symbol mapping operation, etc.) on the data. The transmission processor 311 may generate control symbol(s) by performing processing operations (e.g. encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g. precoding operations) on the data symbol(s), control symbol(s), and/or synchronization/reference symbol(s). An output (e.g. symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g. de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g. data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g. precoding operations) on the data symbol(s), control symbol(s), and/or reference symbol(s). An output (e.g. symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g. de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

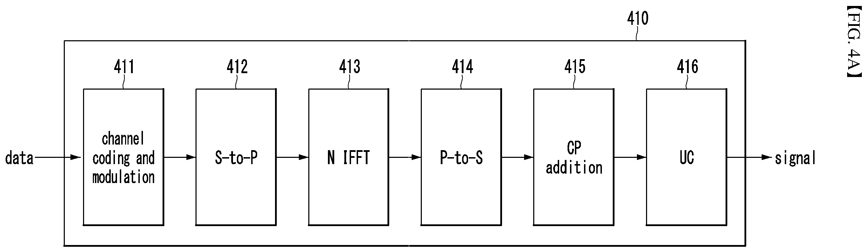

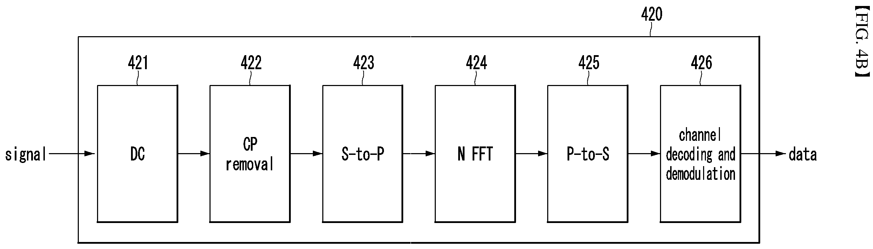

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g. parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g. components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

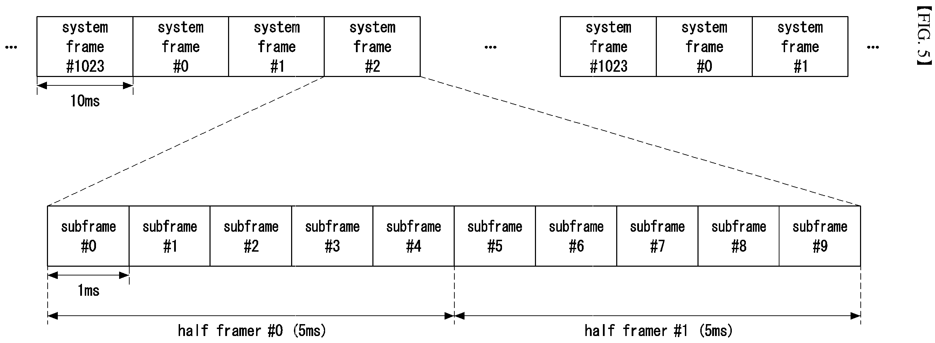

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

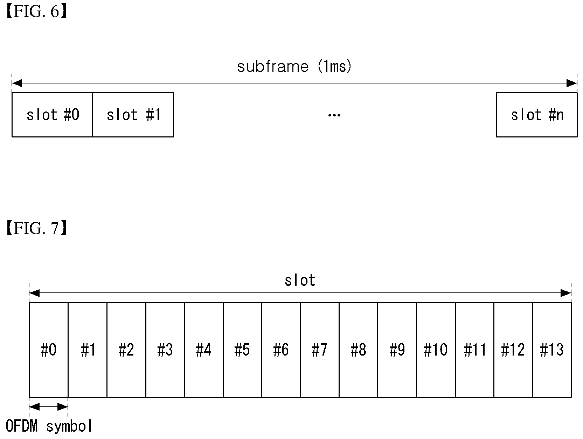

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g. µ = 0), the length of slot may be 1 ms. In this case, one system frame may include 10 slots. When a subcarrier spacing is 30 kHz (e.g. µ = 1), the length of slot may be 0.5 ms. In this case, one system frame may include 20 slots.

When a subcarrier spacing is 60 kHz (e.g. µ = 2), the length of slot may be 0.25 ms. In this case, one system frame may include 40 slots. When a subcarrier spacing is 120 kHz (e.g. µ = 3), the length of slot may be 0.125 ms. In this case, one system frame may include 80 slots. When a subcarrier spacing is 240 kHz (e.g. µ = 4), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g. RRC signaling). Information indicating a semi-static slot format may be included in system information, and the semi-static slot format may be configured cell-specifically. Additionally, a semi-static slot format may be further configured for each terminal through terminal-specific higher-layer signaling (e.g. RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g. slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

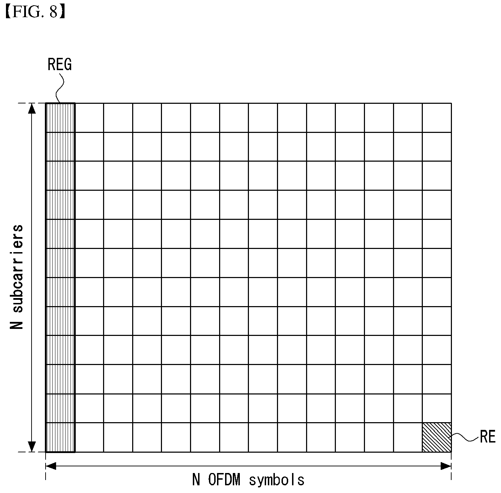

FIG. 8 is a conceptual diagram illustrating a first exemplary embodiment of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g. a common RB grid) based on a reference frequency (e.g. point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g. scheduling information) of the PDSCH to a terminal through a PDCCH. The terminal may obtain the configuration information of the PDSCH by receiving the PDCCH (e.g. Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g. DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g. Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g. in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

The 3GPP Rel-19 NR MIMO work item (WI) addresses improvement schemes for intra-cell and inter-cell beam management. The discussion mainly targets the FR2 band and a single TRP (sTRP) scenario, and aims to reduce overhead and latency while utilizing legacy CSI measurement and reporting procedures. To this end, a UE-initiated and event-driven beam management technique may be utilized.

Beam management defined up to 3GPP Rel-18 is performed in a scheme in which a network (i.e. a base station) leads beam management. In the conventional network-initiated or base station-initiated beam management scheme, a base station may instruct a terminal to perform beam switching for downlink reception or uplink transmission. In this case, since the base station determines the need for beam switching based on a measurement report received from the terminal and instructs the terminal to perform beam switching, the base station may not determine an optimal beam until the base station receives the measurement report transmitted from the terminal.

However, the UE-initiated and event-driven beam management technique refers to a scheme in which a terminal that can recognize beam changes first performs beam management proactively. Compared to the network-initiated beam management operation, latency (e.g. a time required for the base station to request measurement and reporting and to receive the measurement report) and signaling overhead (e.g. overhead for configuring measurement reporting to the terminal by the base station and signaling overhead due to frequent measurement reporting) may be reduced.

Specifically, a procedure in which a base station receives channel state information (CSI) for configured beam(s) from a terminal may be divided into two stages. First, a beam selection stage in which the base station selects candidate beams to be used for communication may be performed. The beam selection may be performed based on reference signals (RSs) that are transmitted in specific beam directions. In this case, the reference signal may be a downlink CSI-RS transmitted by the base station or a sounding reference signal (SRS) transmitted by the terminal. The number of configured RS resources may vary depending on the number of candidate analog beams. In the case of downlink, the terminal may perform beam measurement on CSI-RS (or SSB) transmitted by the base station, and in the case of uplink, the base station may perform beam measurement on SRS transmitted by the terminal. That is, in order to derive beam quality through beam measurement, the terminal may measure a received signal power (e.g. layer 1-reference signal received power (L1-RSRP)) of each RS, and report the measured power to the base station. In this case, the terminal may report a preferred DL RS ID (e.g. SSBRI or CRI) based on measurement values for CSI-RSs or SSBs. In the above description, CSI-RS or SSB may be configured to be transmitted periodically or aperiodically from the base station, and the terminal may report measurement values to the base station based on the RS transmitted periodically or aperiodically.

Beam management procedures defined in current NR specifications are all performed in a base station-initiated scheme. That is, the beam management procedures defined in current NR specifications use a scheme in which a base station requests a terminal to measure some (or specific) beams and then the terminal reports an optimal beam to the base station. In addition, the base station may instruct the terminal to switch to some (or specific) beams for downlink reception and/or uplink transmission. Such a base station-initiated beam management scheme may cause latency and signaling overhead, because the terminal recognizes beam changes first, while the base station cannot recognize such changes until receiving a measurement report from the terminal.

Therefore, when a UE-initiated and event-driven beam management scheme is used, if the terminal determines that beam variation exceeds a threshold (i.e. a specific event occurs), the terminal may trigger reporting of a beam measurement result. In this case, since the terminal may immediately report the beam measurement result only when necessary, uplink signaling overhead may be greatly reduced. In addition, since the terminal may immediately report the measurement result whenever necessary, measurement reporting latency may be reduced.

In an NR communication system, CSI-RS or SSB may be configured for a terminal with a predetermined periodicity through higher-layer signaling, and the terminal may perform beam measurement based on the configured periodicity and report a measurement result to a base station. A beam management operation cannot be performed until the terminal receives RS transmitted from the base station and reports corresponding measurement results. That is, in order to obtain a beam most suitable for data transmission in the conventional beam management procedure, the base station may need to frequently configure periodic beam reporting or frequently trigger aperiodic beam reporting. In this case, overhead due to frequent measurement reporting or overhead due to control signaling for triggering may be greatly increased. On the other hand, when a beam reporting frequency is set to be low, an interval of measurement reporting becomes long, and thus the base station cannot always obtain an optimal beam, thereby degrading performance of the network. Considering that a terminal performs beam measurement and better recognizes changes in beam quality, when a beam management operation is initiated by the terminal, advantages may be achieved in terms of both reporting overhead and reporting timeliness. When the terminal identifies that the current beam quality is deteriorating, the terminal may initiate beam reporting so that the base station can recognize beam quality without requiring frequent beam reporting. However, a method for switching from a network-driven beam management state to UE-initiated beam management, as well as signaling methods required therefor, have not yet been defined. Accordingly, the present disclosure aims to propose a method in which a terminal triggers UE-initiated beam management.

In the following description, UE-initiated and event-driven beam management may be collectively referred to as terminal-initiated beam management. In addition, network-initiated beam management may be used interchangeably with base station-initiated beam management. Furthermore, the term "beam management" may be used interchangeably with a beam management procedure, a beam management operation, a beam management method, or a beam management scheme.

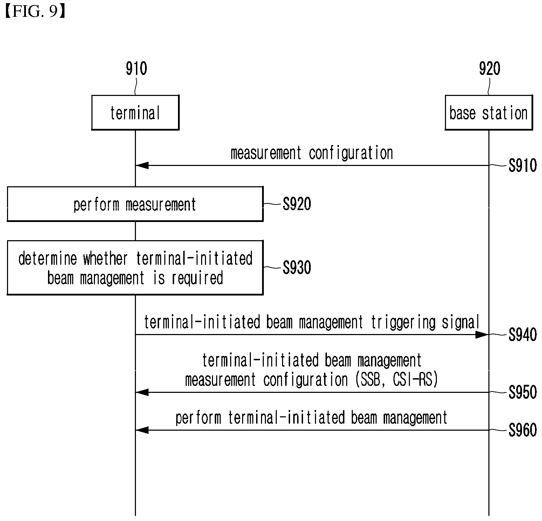

FIG. 9 is a sequence diagram illustrating a terminal-initiated beam management method according to an exemplary embodiment of the present disclosure.

As shown in FIG. 9, a base station 920 may provide measurement configuration information to a terminal 910 (S910). The measurement configuration information may be measurement configuration information for a legacy beam management method and may be provided through radio resource control (RRC) signaling. That is, in step S910, the base station 920 and the terminal 910 may be in a state of performing legacy beam management (i.e. base station-initiated beam management).

The terminal 910 may perform beam measurement on CSI-RS and/or SSB based on the measurement configuration information provided by the base station 920 (S920). The beam measurement in step S920 may be performed in the same manner as in legacy beam management.

Meanwhile, the measurement configuration information provided in step S910 may not be measurement configuration information for legacy beam management (i.e. base station-initiated beam management), but may be information for configuring a separate CSI-RS or SSB for determining whether to trigger terminal-initiated beam management proposed in the present disclosure, or may be information for configuring measurement for a predefined signal or resource other than CSI-RS or SSB.

The terminal 910 may determine the need for terminal-initiated beam management based on a result of measurement performed in step S920 (S930). Various conditions for the terminal to determine the need for terminal-initiated beam management are described below.

Based on the determination performed in step S930, when it is determined that terminal-initiated beam management is required, the terminal 910 may transmit a terminal-initiated beam management triggering signal to the base station 920 (S940).

In this case, the terminal-initiated beam management triggering signal may be included in a beam management-related signal transmitted by the terminal 910 to the base station 920, may be transmitted simultaneously with such a signal, or may be transmitted at a time before or after a time at which such a signal is transmitted. That is, the terminal-initiated beam management triggering signal may have a predetermined time/frequency association with a beam management-related signal transmitted by the terminal 910 to the base station 920. Alternatively, the terminal-initiated beam management triggering signal may be transmitted independently from another signal related to beam management transmitted by the terminal 910 to the base station 920.

The terminal-initiated beam management triggering signal (e.g. a 1-bit indicator) may be included in a beam management-related signal or transmitted via uplink control information (UCI). Alternatively, the terminal-initiated beam management triggering signal may be transmitted via higher-layer signaling (e.g. MAC-CE or RRC signaling).

Upon receiving the terminal-initiated beam management triggering signal, the base station 920 may provide measurement configuration information for terminal-initiated beam management (e.g. configuration of periodic or aperiodic CSI-RS or SSB) to the terminal 910, terminals including the corresponding terminal 910, a terminal group, or terminal groups (S950). To distinguish between the measurement configuration information in step S910 and that in step S950, the former may be referred to as first measurement configuration information, and the latter may be referred to as second measurement configuration information. Meanwhile, measurement target reference signal(s) or resource(s) configured by the second measurement configuration information may be different from measurement target reference signal(s) or resource(s) configured by the first measurement configuration information. Alternatively, measurement target reference signal(s) or resource(s) configured by the second measurement configuration information may be identical to measurement target reference signal(s) or resource(s) configured by the first measurement configuration information.

Meanwhile, although FIG. 9 illustrates only a case in which the terminal-initiated beam management triggering signal activates terminal-initiated beam management, the terminal-initiated beam management triggering signal may also be used to deactivate terminal-initiated beam management. For example, when the terminal-initiated beam management triggering signal is configured as a 1-bit indicator, the terminal-initiated beam management triggering signal set to a first value (e.g. 1) may indicate activation of terminal-initiated beam management, and the terminal-initiated beam management triggering signal set to a second value (e.g. 0) may indicate deactivation of terminal-initiated beam management.

As described above, the terminal 910 may determine whether to perform terminal-initiated beam management when a beam measurement value obtained through measurement in step S930 satisfies a predetermined condition. Alternatively, the terminal 910 may stop terminal-initiated beam management when a beam measurement value obtained through measurement satisfies a predetermined condition. The predetermined condition may be configured based on an RSRP value (or an RSSI value or an SINR value).

Hereinafter, conditions for determining whether terminal-initiated beam management in required in step S930 are described.

**A first condition:** the terminal may determine that terminal-initiated beam management is triggered (or activated) when an RSRP value measured for the signal(s) or resource(s) configured in step S910 is less than a configured threshold. The terminal may determine that terminal-initiated beam management is stopped (or deactivated) when an RSRP value measured for the signal(s) or resource(s) configured in step S910 is greater than the configured threshold. Conversely, when the measured RSRP value is greater than a configured threshold, terminal-initiated beam management may be activated, and when the measure RSRP value is less than the configured threshold, terminal-initiated beam management may be deactivated. This alternative assumption may also apply to the following conditions.

**A second condition:** the terminal may determine that terminal-initiated beam management is triggered (or activated) when an average value (or, a minimum value, maximum value, or median value) of RSRP values measured during a specific period for the signal(s) or resource(s) configured in step S910 is less than a configured threshold. Meanwhile, the terminal may determine that terminal-initiated beam management is stopped (or deactivated) when an average value (or, a minimum value, maximum value, or median value) of RSRP values measured during a specific period for the signal(s) or resource(s) configured in step S910 is greater than the configured threshold.

A third condition: the terminal may determine that terminal-initiated beam management is activated when a difference between an RSRP value measured for the signal(s) or resource(s) configured in step S910 and an RSRP value measured at a previous time (e.g. a previous time unit such as a slot or subframe) immediately before a measurement time of the RSRP value, or at a time earlier by a predefined duration than the measurement time is less than a configured threshold. Meanwhile, the terminal may determine that terminal-initiated beam management is deactivated when the difference between the RSRP value measured for the signal(s) or resource(s) configured in step S910 and the RSRP value measured at a previous time immediately before the measurement time or at a time earlier by a predefined duration than the measurement time is greater than the configured threshold.

**A fourth condition:** the terminal may determine whether to trigger terminal-initiated beam management (i.e. whether to activate terminal-initiated beam management) based on a value (e.g. an average value, minimum value, or median value) derived from RSRP values measured in a first time window for signal(s) or resource(s) configured in step S910 and a value (e.g. an average value, minimum value, or median value) derived from RSRP values measured in a second time window preceding the first time window. For example, the terminal may determine that terminal-initiated beam management is activated when a difference between average RSRP values measured in the first time window and the second time window is less than a configured threshold. Meanwhile, the terminal may determine that terminal-initiated beam management is deactivated when the difference between the average RSRP values measured in the first time window and the second time window is greater than the configured threshold.

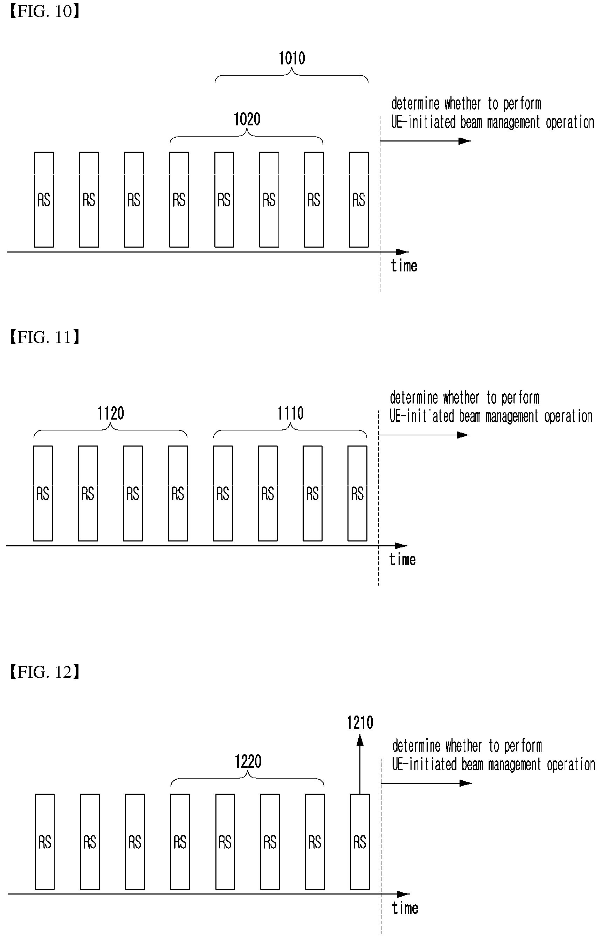

FIG. 10 and FIG. 11 are conceptual diagrams illustrating a method of determining whether to trigger terminal-initiated beam management according to exemplary embodiments of the present disclosure.

As shown in FIG. 10, a first time window 1010 for measuring an average RSRP value may include four RSs selected from periodic RSs transmitted by the base station, and a second time window 1020 for comparison may also include four RSs selected from the periodic RSs. In FIG. 10, the first time window 1010 and the second time window 1020 may overlap. For example, the first time window 1010 and the second time window 1020 may be configured in a sliding manner so as to overlap with each other.

As shown in FIG. 11, the first time window 1110 and the second time window 1120 may not overlap. A time offset may be defined between the first time window 1110 and the second time window 1120 that do not overlap with each other.

**A fifth condition:** the terminal may determine that terminal-initiated beam management is triggered (or activated) when a difference between an RSRP value measured for signals or resources configured in step S910 and an average value (or a minimum value, maximum value, or median value) of RSRP values measured during a specific period prior to the time at which the RSRP value measured for the signals or resources is obtained is less than a configured threshold. As another example, the terminal may determine that terminal-initiated beam management is stopped (or deactivated) when the difference between the RSRP value measured for the signals or resources configured in step S910 and the average value (or the minimum value, maximum value, or median value) of the RSRP values measured during the specific period prior to the time at which the RSRP value measured for the signals or resources is obtained is greater than the configured threshold.

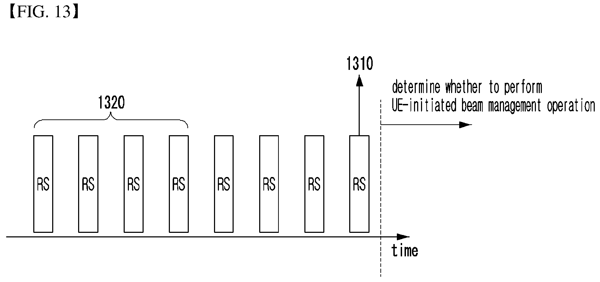

FIG. 12 and FIG. 13 are conceptual diagrams illustrating a method for determining whether to trigger terminal-initiated beam management according to other exemplary embodiments of the present disclosure.

As shown in FIG. 12, a time window 1220 for measuring an average RSRP value measured over a specific period may include four RSs selected from periodic RSs transmitted by the base station, and may include an RS transmitted immediately before a measurement time 1210 of a current RSRP value.

As shown in FIG. 13, a time window 1320 may have a predetermined time offset with respect to a measurement time 1310 of a current RSRP value.

In order to determine the need for terminal-initiated beam management, the above conditions may be applied individually or a combination of two or more conditions may be applied. For example, depending on a form in which a conventional base station-initiated beam management operation has been performed (e.g. periodic CSI-RS transmission or aperiodic CSI-RS transmission), it may be determined whether one of the above conditions or a combination of two or more conditions is applied. For example, when the base station-initiated beam management has been performed based on periodic CSI-RS transmission, the terminal may determine the need for terminal-initiated beam management based on the first condition, and when the base station-initiated beam management has been performed based on aperiodic CSI-RS transmission, the terminal may determine the need for terminal-initiated beam management based on the third condition.

In the above description, an operation during a specific period may be interpreted as including an operation based on a specific number of RSs. Assuming SSB transmission, the operation may be interpreted as being based on a unit of an SSB transmission period, a unit of a section (e.g. a half-frame) in which SSBs are transmitted within the SSB transmission period, or a maximum number or a specific number of SSBs within the SSB transmission period.

In the above description, performing terminal-initiated beam management may be interpreted as the terminal transmitting a signaling message (e.g. terminal-initiated beam management triggering signal) to instruct the base station to perform terminal-initiated beam management. Similarly, stopping terminal-initiated beam management may be interpreted as the terminal transmitting a signaling message to instruct stopping of terminal-initiated beam management or switching to conventional network-initiated beam management.

In the above description, performing terminal-initiated beam management may mean that the terminal performs beam reporting when a beam reporting event occurs (i.e. event-driven beam management). For terminal-initiated and event-driven beam reporting, a trigger event detection condition, a condition for evaluating whether a trigger condition is satisfied based on monitoring RSs, and/or a condition for declaring a beam reporting event may be defined.

Trigger events for terminal-initiated and event-driven beam reporting and corresponding conditions (e.g. thresholds) may be defined as follows:
- Event-1: beam quality of a current beam (e.g. L1-RSRP) is below a specific threshold
- Event-2: beam quality of one or more new beams (e.g. L1-RSRP) is better than that of the current beam by at least a threshold
- Event-3: beam quality of a new beam is above a specific threshold
- Event-4: beam quality of a current beam is below a threshold 1 and beam quality of at least one new beam is above a threshold 2
- Event-5: an absolute difference between beam quality of a current beam and beam quality of at least one new beam is below a threshold
- Event-6: a current beam is not included in top K beams, that is, not included in configured beams for measurement and reporting
- Event-7a: beam quality of at least one new beam is improved by at least a threshold compared to an RS having the worst quality in an activated TCI state
- Event-7b: beam quality of at least one new beam is improved by at least a threshold compared to an RS having the best quality in an activated TCI state
- Event-8: beam qualities of M (> 1) new beams are improved by at least threshold compared to the current beam
- Event-9: beam quality of at least one new beam is improved by at least a threshold compared to a configured reference RS (e.g. SSB or CSI-RS)

In the above description, in terminal-initiated and event-driven beam reporting, at least L1-RSRP may be supported as a measurement quantity for intra-cell and inter-cell SSB-based beam management, and periodic CSI-RS for beam management may be supported.

A quality metric used for each event may differ. In a specific event (e.g. Event-2), at least RSRP may be used as the quality metric, and filtering for L1-RSRP (when present) may be determined by terminal implementation. A timer or counter may be defined to filter event triggering indications, similarly to a beam failure detection (BFD) procedure defined in TS 38.321. Alternatively, filtered RSRP or L1-RSRP configured by the network may be supported.

In the above description, an RS for measuring a current beam may be implicitly derived from an RS quasi-co-located with an indicated TCI state, may be implicitly derived from an RS quasi-co-located with an activated TCI state, and/or may be explicitly configured by RRC or MAC-CE signaling.

In the above description, an RS for measuring a new beam may be explicitly configured by RRC signaling (e.g. reuse of a legacy RS measurement configuration) or by MAC-CE. In this case, a current beam may be excluded from the configured RS set. Alternatively, an RS for measuring a new beam may be implicitly derived from an RS quasi-co-located with an activated TCI state and/or from an RS quasi-co-located with a configured TCI state.

In the above description, when two RSs are quasi-co-located in a TCI state, a measurement RS may be derived based on a specific QCL type (e.g. QCL-TypeD).

In the above description, thresholds used in terminal-initiated and event-driven beam reporting may be configured via RRC signaling per BWP or component carrier (CC), or per trigger event or CSI report configuration.

In the above description, transmitting information through DCI may mean transmitting the information as control information over a physical channel. Such transmission via DCI may also be interpreted as including transmission via UCI.

The methods and apparatuses proposed in the present disclosure may be applied to intra-cell and inter-cell beam management scenarios, and may also be applied to mTRP operation based on similar principles.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a terminal, comprising:
receiving first measurement configuration information from a base station;
performing measurement based on the first measurement configuration information, and determining whether terminal-initiated beam management is required based on a result of the measurement;
based on determining that the terminal-initiated beam management is required, transmitting a terminal-initiated beam management triggering signal to the base station; and
performing terminal-initiated beam management with the base station.

2. The method of claim 1, further comprising: receiving second measurement configuration information from the base station based on the terminal-initiated beam management triggering signal,
wherein the terminal-initiated beam management is performed based on the second measurement configuration information.

3. The method of claim 2, wherein measurement target reference signal(s) or resource(s) configured by the second measurement configuration information are different from measurement target reference signal(s) or resource(s) configured by the first measurement configuration information.

4. The method of claim 1, wherein the first measurement configuration information indicates at least one of a channel state information-reference signal (CSI-RS), a synchronization signal block (SSB), a preconfigured signal, or a preconfigured time/frequency resource as a measurement target.

5. The method of claim 2, wherein the second measurement configuration information indicates at least one of a CSI-RS or SSB as a measurement target.

6. The method of claim 1, wherein the terminal-initiated beam management triggering signal is transmitted through a medium access control-control element (MAC-CE) and/or uplink control information (UCI).

7. The method of claim 1, wherein the determining of whether the terminal-initiated beam management is required based on the result of the measurement is performed based on a comparison between a first threshold and a first measurement value obtained by measuring measurement target reference signal(s) or resource(s) indicated by the first measurement configuration information at a first time.

8. The method of claim 1, wherein the determining of whether the terminal-initiated beam management is required based on the result of the measurement is performed based on a comparison between a second threshold and a second measurement value obtained by measuring measurement target reference signal(s) or resource(s) indicated by the first measurement configuration information during a first time window.

9. The method of claim 1, wherein the determining of whether the terminal-initiated beam management is required based on the result of the measurement is performed based on a comparison between a third threshold and a difference between a first measurement value obtained by measuring measurement target reference signal(s) or resource(s) indicated by the first measurement configuration information at a first time and a third measurement value obtained by measuring the measurement target reference signal(s) or resource(s) at a time immediately before the first time or at a time earlier by a predetermined duration than the first time.

10. The method of claim 1, wherein the determining of whether the terminal-initiated beam management is required based on the result of the measurement is performed based on a comparison between a fourth threshold and a difference between a fourth measurement value obtained by measuring measurement target reference signal(s) or resource(s) indicated by the first measurement configuration information during a second time window and a fifth measurement value obtained by measuring the measurement target reference signal(s) or resource(s) indicated by the first measurement configuration information during a third time window.

11. The method of claim 1, wherein the determining of whether the terminal-initiated beam management is required based on the result of the measurement is performed based on a comparison between a fifth threshold and a difference between a first measurement value obtained by measuring measurement target reference signal(s) or resource(s) indicated by the first measurement configuration information at a first time and a sixth measurement value obtained by measuring the measurement target reference signal(s) or resource(s) during a fourth time window preceding the first time.

12. A method of a base station, comprising:
transmitting first measurement configuration information to a terminal;
receiving a terminal-initiated beam management triggering signal from the terminal; and
performing terminal-initiated beam management with the terminal based on the terminal-initiated beam management triggering signal,
wherein the terminal performs measurement based on the first measurement configuration information and transmits the terminal-initiated beam management triggering signal based on determining that the terminal-initiated beam management is required based on a result of the measurement.

13. The method of claim 12, further comprising: transmitting second measurement configuration information to the terminal based on the terminal-initiated beam management triggering signal,
wherein the terminal-initiated beam management is performed based on the second measurement configuration information.

14. The method of claim 13, wherein measurement target reference signal(s) or resource(s) configured by the second measurement configuration information are different from measurement target reference signal(s) or resource(s) configured by the first measurement configuration information.

15. The method of claim 12, wherein the first measurement configuration information indicates at least one of a channel state information-reference signal (CSI-RS), a synchronization signal block (SSB), a preconfigured signal, or a preconfigured time/frequency resource as a measurement target.

16. The method of claim 13, wherein the second measurement configuration information indicates at least one of a CSI-RS or SSB as a measurement target.

17. A terminal comprising: at least one processor, wherein the at least one processor causes the terminal to:
receive first measurement configuration information from a base station;
perform measurement based on the first measurement configuration information, and determine whether terminal-initiated beam management is required based on a result of the measurement;
based on determining that the terminal-initiated beam management is required, transmit a terminal-initiated beam management triggering signal to the base station; and
perform terminal-initiated beam management with the base station.

18. The terminal of claim 17, wherein the at least one processor further causes the terminal to: receive second measurement configuration information from the base station based on the terminal-initiated beam management triggering signal,
wherein the terminal-initiated beam management is performed based on the second measurement configuration information.

19. The terminal of claim 18, wherein measurement target reference signal(s) or resource(s) configured by the second measurement configuration information are different from measurement target reference signal(s) or resource(s) configured by the first measurement configuration information.

20. The terminal of claim 17, wherein the first measurement configuration information indicates at least one of a channel state information-reference signal (CSI-RS), a synchronization signal block (SSB), a preconfigured signal, or a preconfigured time/frequency resource as a measurement target.
